## Europäisches Patentamt

## European Patent Office

## Office européen des brevets

(11) Veröffentlichungsnummer: **0 178 536**
**B1**

(12) # EUROPÄISCHE PATENTSCHRIFT

(45) Veröffentlichungstag der Patentschrift:
18.05.88

(21) Anmeldenummer: 85112476.8

(22) Anmeldetag: 02.10.85

(51) Int. Cl.⁴: **F 16 H 53/02**, F 16 D 1/08,
F 16 D 1/04

(54) **Verfahren zum Befestigen von Antriebselementen auf einer zylindrischen Welle mittels azimutal in diese einschneidender Keile, sowie hiernach hergestellte Wellenverbindung.**

(30) Priorität: 17.10.84 DE 3438065

(43) Veröffentlichungstag der Anmeldung:
23.04.86 Patentblatt 86/17

(45) Bekanntmachung des Hinweises auf die Patenterteilung:
18.05.88 Patentblatt 88/20

(84) Benannte Vertragsstaaten:
AT BE CH DE FR GB IT LI LU NL SE

(56) Entgegenhaltungen:
DE-A-2 336 241
DE-C-396 673
DE-C-872 886
US-A-1 406 247

(73) Patentinhaber: **INTERATOM Gesellschaft mit beschränkter Haftung, Friedrich- Ebert- Strasse, D-5060 Bergisch Gladbach 1 (DE)**

(72) Erfinder: **Maus, Wolfgang, Dipl.- Ing., Gut Horst, D-5060 Bergisch- Gladbach 1 (DE)**
Erfinder: **Swars, Helmut, Dipl.- Ing., Riedweg 11, D-5060 Bergisch- Gladbach 1 (DE)**

(74) Vertreter: **Mehl, Ernst, Dipl.- Ing., Postfach 22 01 76, D-8000 München 22 (DE)**

EP 0 178 536 B1

## Beschreibung

Die vorliegende Erfindung betrifft ein Verfahren nach dem Oberbegriff des 1. Anspruchs, mit dem Antriebselemente, z. B. Nocken, Lager oder Zahnräder auf einer glatten Welle befestigt werden können, sowie besondere Ausgestaltungen der hierzu verwendeten Teile. Die Erfindung wird im folgenden am Beispiel der Herstellung von Nockenwellen für Verbrennungskraftmaschinen beschrieben, ist jedoch nicht auf diesen Anwendungsfall beschränkt, sondern überall dort einsetzbar, wo Bauteile unverdrehbar und axial unverschiebbar auf glatten Wellen befestigt werden sollen. Dies insbesondere dann, wenn für die Großserienfertigung Lösungen erforderlich werden, die weniger aufwendig sind als die sonst im Maschinenbau verwendete Befestigung mit einem Paßkeil (auch Feder genannt), der in eine zu diesem Zweck in die Welle eingefräste Ausnehmung eingelegt wird. Eine Übersicht der hierfür bereits vorgeschlagenen Lösungen gibt die DE-A-23 36 241.

Diesem Stand der Technik gegenüber besteht die Aufgabe der vorliegenden Erfindung darin, ein für diese Zwecke besser geeignetes Verfahren anzugeben, das es gestattet, als Grundmaterial für die Wellen statt teurer Drehteile erheblich billiger herzustellende Präzisionsrohre zu verwenden, die nicht vorbearbeitet werden müssen und auf denen die darauf zu befestigenden Teile in wenigen Arbeitsgängen rein formschlüssig fixiert werden.

Die Lösung dieser Aufgabe geschieht durch die im kennzeichnenden Teil des 1. Verfahrensanspruchs angegebenen Maßnahmen. Es wird eine Keilverbindung hergestellt, bei der sich die Keile in die Oberfläche der Welle eingraben und so eine formschlüssige Verbindung bilden, sowie gegenüber einem späteren Lockern durch z. B. Vibrationen abgesichert werden.

Um auch die Sicherheit der Positionierung in der Richtung der Wellenachse zu verbessern, empfiehlt sich die im 2. Anspruch vorgeschlagene weitere Ausgestaltung der Erfindung.

Bei der Wellenverbindung nach dem Vorrichtungsanspruch 3 können die miteinander in Berührung kommenden Flächen von Keil und Nut leichter aufeinander abgleiten.

Es ist bekannt, z. B. aus der DE-C-369 674, Längskanten der Keile als Schneidkanten auszubilden, damit sie sich leichter in die Wellenoberfläche eingraben. Die im 4. Anspruch vorgeschlagene Verwendung von in dieser Hinsicht verbesserten Keilen der Wellenverbindung erleichtert die Durchführung des Verfahrens erheblich.

Die im 5. Anspruch vorgeschlagene weitere Verbesserung der Keile erleichtert zusätzlich einerseits das Eintreiben der Keile in die Wellenoberfläche und andererseits das Aufspreizen zur Sicherung ihrer Lage.

Ausführungsbeispiele der Erfindung sind in der Zeichnung dargestellt, und zwar zeigt

Figur 1 einen Längsaxialschnitt entsprechend der Linie I-I der Figur 2,

Figur 2 einen Querschnitt entsprechend der Linie II-II der Figur 1 und

Figur 3 in vergrößertem Maßstab die Einzelheit III der Figur 2, wobei auch alternative Ausführungsformen aufgenommen wurden.

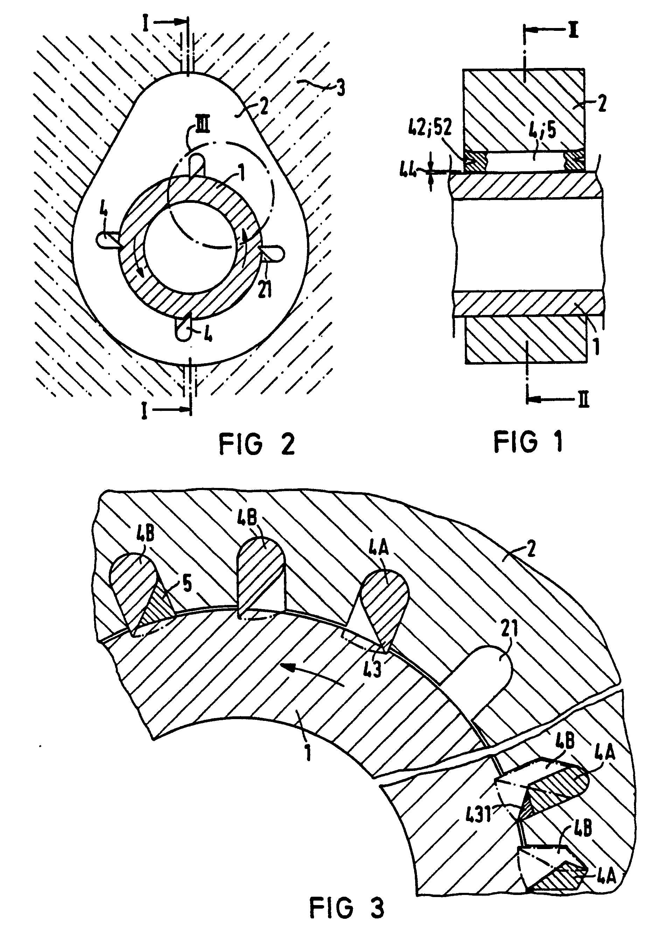

Auf einer glatten, zylindrischen Welle 1 soll ein Nocken 2 befestigt werden. Dieser wird, von einer zangenartigen Vorrichtung 3 gehalten, in die gewünschte Lage in bezug auf die Welle 1 gebracht. Der Nocken 2 ist an seiner Innenkontur mit einer oder mehreren Nuten 21 versehen, in die erste Keile 4 eingelegt werden, und zwar zunächst in der in Figur 3 mit A bezeichneten Stellung, bei der sie völlig in die Nut 21 zurücktreten. Die ersten Keile 4 können dabei verschiedene, an die Form der Nut 21 angepaßte Querschnitte aufweisen, wie dies an den im unteren rechten Teil der Figur 3 dargestellten Alternativ-Ausführungen deutlich wird. Dort ist auch die Abwandlung dargestellt, bei der eine an die ersten Keile 4 angeformte Schneidkante 43 die Form eines besonderen Hartmetallteilchens 431 hat, das in bekannter Weise mit dem Körper des Keils 4 verlötet ist. Sind alle ersten Keile 4 in ihre entsprechenden Nuten eingelegt worden, so werden die Welle 1 und der Nocken 2 in der durch die Pfeile angedeuteten Richtung gegeneinander verdreht. Die ersten Keile 4 werden dabei gewaltsam in ihre zweite, mit B bezeichnete Endlage gedreht, wobei sie sich mit ihrer Schneidkante 43 in die Oberfläche der aus verhältnismäßig weichem Werkstoff hergestellten Welle 1 eingraben. Der in den Nuten 21 verbliebene freie Raum kann nunmehr durch Einlegen von zweiten Keilen 5 ausgefüllt werden. In die ersten und/oder zweiten Keile 4, 5 wird dann mit Hilfe eines meißelartigen Werkzeuges an ihren Stirnseiten eine Kerbe 42, 52 eingeschlagen, wodurch sie auch in Achsrichtung endgültig fixiert werden.

Der erste Keil 4 kann an seinem einen Ende, vorzugsweise demjenigen, das zuerst in die Nut 21 eingeführt wird, ein Übermaß 44 infolge leicht angeschrägter Bodenfläche aufweisen. Dann gräbt er sich bereits um ein gewisses Maß in die Oberfläche der Welle 1 und wird, ohne auf dieser abgleiten zu können, beim Verdrehen desselben gegenüber dem Nocken 2 sicher in die Endlage B gebracht.

## Patentansprüche

1. Verfahren zum Befestigen von Antriebselementen (2) auf einer glatten zylindrischen Welle (1) mittels Keilen (4, 5), die in Nuten (21) einführbar sind, die axial an der Innenkontur der Antriebselemente angelegt sind, dadurch gekennzeichnet, daß erste Keile (4) verwendet werden, die in der Nut (21) azimutal zwischen einer ersten Endlage A, in der sie in die Kontur der Nut zurücktreten, und einer zweiten Endlage B verschwenkbar sind, in der sie nach innen über die kontur der Nut heraustreten, daß das Verschwenken der Keile von der ersten in die zweite Endlage durch eine Drehbewegung zwischen Antriebselementen (2) und Welle (1) bewirkt wird, und daß die bestimmungsgemäß in die zweite Endlage B gebrachten ersten Keile (4) durch zweite Keile (5) fixiert werden, die den Raum der Nut (21) ausfüllen, der nicht durch die ersten Keile (4) ausgefüllt wird.

2. Verfahren nach Anspruch 1, dadurch gekennzeichnet, daß die bestimmungsgemäß in ihre Endlage gebrachten ersten und/oder zweiten Keile (4, 5) an ihrer Vorder- und/oder Rückseite gespalten und gespreizt (42, 52) werden.

3. Wellenverbindung mit einer glatten Welle (1) mit nach dem Verfahren nach Anspruch 1 darauf mittels Keilen (4, 5) befestigten Antriebselementen (2), wobei die Keile in Nuten (21) einführbar sind, die axial an der Innenkontur der Antriebselemente angelegt sind, dadurch gekennzeichnet, daß die Nuten (21) einen kreisbogenförmigen Grund und die ersten Keile (4) auf einem Teil ihres Umfanges eine der Nut angepaßte kreisbogenförmige Kontur aufweisen, sodaß sie zwischen einer ersten Endlage A, in der sie in die Kontur der Nut zurücktreten, und einer zweiten Endlage B verschwenkbar sind, in der sie nach innen über die Kontur der Nut heraustreten, wobei sie in der zweiten Endlage B in der Nut (21) einen Baum für zweite Keile (5) zur Fixierung der zweiten Endlage freilassen.

4. Wellenverbindung nach Anspruch 3, wobei die ersten Keile (4) mindestens eine schneidenförmig ausgestaltete Längskante (43) aufweisen, dadurch gekennzeichnet, daß die schneidenförmig gestaltete Längskante (43) durch ein Teil (431) aus einem harten Werkstoff gebildet wird, das mit dem Rest des Keils (4) unlösbar verbunden ist, der aus einem zähen Werkstoff hergestellt iet.

5. Wellenverbindung nach Anspruch 3, dadurch gekennzeichnet, daß die ersten Keile (4) am einen Ende gegenüber den Nuten (21) radial Übermaß (44) aufweisen.

## Claims

1. A method for fixing drive elements (2) on a smooth cylindrical shaft (1) by means of keys (4, 5), which may be introduced into slots (21) arranged axially in the inner contour of the drive elements, characterised in that first keys (4) are employed, which can be pivoted in the slot (21) azimuthally between a first end position A, in which they move back in to the contour of the slot, and a second end position B, in which they move out of the contour of the slot towards the inside, in that the pivoting of the keys from the first end position to the second end position is effected by a rotary motion between drive elements (2) and shaft (1), and in that the first keys (4), having been brought as directed into the second end position B, are locked in position by second keys (5), which fill up the space in the slot (21) which is not filled up by the first keys (4).

2. A method according to claim 1, characterised in that the first keys (4), having been brought as directed to their end position, and/or the second keys (5), are split and forced apart on their front and/or reverse sides (42, 52).

3. A shaft joint with a smooth shaft (1) with drive elements (2) fitted on it by means of keys (4, 5) according to the method according to claim 1, where the keys may be introduced into slots (21) which are axially arranged on the inner contour of the drive elements, characterised in that the slots have a circular base and the first keys (4) have on part of their perimeter a circular contour which has been adapted to the slot so that they may be pivoted between a first end position A, in which they move back in to the contour of the slot, and a second end position B, in which they move out of the contour of the slot towards the inside, leaving free when in the second end position B a space in the slot (21) for the second keys used to lock the second end position.

4. A shaft joint according to claim 3, wherein the first keys (4) have at least one long edge which is shaped to form a cutting edge (43), characterised in that the long edge, which is shaped to form a cutting edge, is formed of a part (431) made of a hard material, which is undetachably joined to the rest of the key (4), which is manufactured from a tough material.

5. A shaft joint according to claim 3, characterised in that the first keys (4) are radially oversized (44) on one end compared with the slots (21).

## Revendications

1. Procédé pour fixer des organes d'entraînement (2) sur un arbre cylindrique lisse (1) à l'aide de clavettes (4, 5), qui peuvent être insérées dans des rainures (21) qui sont ménagées axialement dans le pourtour intérieur des organes d'entraînement, caractérisé par le fait qu'on utilise des premières clavettes (4), qui peuvent être déplacées par basculement, selon un mode azimutal, dans la rainure (21), entre une première position d'extrémité A, dans laquelle elles s'effacent à l'intérieur du contour de la rainure, et une seconde position d'extrémité B, dans laquelle elles sortent vers l'intérieur au-delà du contour de la rainure, que le mouvement de basculement des clavettes depuis la première position d'extrémité dans la seconde position d'extrémité est obtenu au moyen d'un mouvement de rotation entre les organes d'entraînement (2) et l'arbre (1) et que les premières clavettes (4), amenées de façon conforme aux spécifications dans la seconde position d'extrémité B, sont fixées par des secondes clavettes (5) qui remplissent le volume de la rainure (21) qui n'est pas rempli par les premières clavettes (4).

2. Procédé suivant la revendication 1, caractérisé par le fait qu'on fend et on écarte (42, 52), au niveau de leur face avant et/ou arrière, les premières et/ou secondes clavettes (4, 5) amenées conformément aux spécifications dans leur position d'extrémité.

3. Raccordement d'un arbre lisse (1) à des organes d'entraînement (2) fixés sur l'arbre au moyen de clavettes (4, 5) conformément au procédé selon la revendication 1, les clavettes pouvant être introduites dans des rainures (21) qui sont ménagées axialement sur le pourtour intérieur des organes d'entraînement, caractérisé par le fait que les rainures (21) possèdent un fond de forme circulaire et que les premières clavettes (4) possèdent, sur une partie de leur pourtour, un contour en forme d'arc de cercle, adapté à la rainure de sorte qu'ils peuvent être déplacés par basculement entre une première position d'extrémité A, dans laquelle ils sont en retrait à l'intérieur du contour de la rainure, et une seconde position d'extrémité B, dans laquelle ils font saillie vers l'intérieur au-delà du contour de la rainure, auquel cas, lorsqu'ils sont dans la seconde position d'extrémité B dans la rainure (21), ils libèrent un espace pour des secondes clavettes (5) servant à réaliser la fixation dans la seconde position d'extrémité.

4. Raccordement d'arbre suivant la revendication 3, dans lequel les premières clavettes (4) comportent au moins une arête longitudinale (43) réalisée sous la forme d'un couteau, caractérisé par le fait que l'arête longitudinale en forme de couteau (43) est formée par un élément (431) réalisé en un matériau dur, qui est relié de facon in détachable au reste de la clavette (4) qui est réalisé en un matériau tenace.

5. Raccordement d'arbre suivant la revendication 3, caractérisé par le fait qu'à une extrémité, les premières clavettes (4) présentent une surcote radiale (4) par rapport aux rainures (21).

FIG 2

FIG 1

FIG 3